# EUROPEAN PATENT APPLICATION

(11) **EP 4 318 680 A1**
(43) Date of publication of application: **07.02.2024**
(21) Application number: 22938759.2
(22) Date of filing: 24.04.2022
(51) Int. Cl.: H01M 4/62, H01M 4/13, H01M 10/0525

(54) **NEGATIVE ELECTRODE PLATE AND PREPARATION METHOD THEREFOR, SECONDARY BATTERY, BATTERY MODULE, BATTERY PACK AND ELECTRIC DEVICE**

(71) Applicant: Contemporary Amperex Technology Co., Limited, Ningde, Fujian 352100 (CN)
(72) Inventor: WU, Qifan, Ningde, Fujian 352100 (CN); ZHANG, Ming, Ningde, Fujian 352100 (CN); WU, Yale, Ningde, Fujian 352100 (CN)
(74) Representative: Gong, Jinping
(86) International application number: PCT/CN2022/088710
(87) International publication number: WO 2023/205927

(57) **Abstract**

This application relates to a negative electrode plate including a negative electrode current collector and a negative electrode film layer on at least one surface of the negative electrode current collector, where the negative electrode film layer includes a fluoropolymer, the fluoropolymer includes at least one of a polymer of a monomer in formula 1 and a copolymer of a monomer in formula 1 and a monomer in formula 2, and the fluoropolymer is present in the negative electrode film layer in form of spherical particles. This application further relates to a preparation method of negative electrode plate, a secondary battery, a battery module, a battery pack, and an electric apparatus.

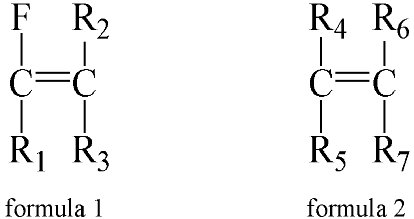

## Description

### TECHNICAL FIELD

This application relates to the field of secondary battery technologies, especially to a negative electrode plate and a preparation method thereof, a secondary battery, a battery module, a battery pack, and an electric apparatus.

### BACKGROUND

In recent years, the application range of secondary batteries has significantly expanded. Secondary batteries are now extensively utilized in energy storage power supply systems such as hydroelectric power plants, thermal power plants, wind power plants, and solar power plants, and many other fields including electric tools, electric bicycles, electric motorcycles, electric vehicles, military equipment, and aerospace. Due to significant advancements in secondary batteries, higher requirements have been placed on their energy density, cycling performance, safety features, and the like. However, existing secondary batteries still require further improvement, especially in terms of low-temperature characteristics and cycling performance.

### SUMMARY

This application is based on the above subject and aims to provide a negative electrode plate such that a secondary battery including it has improved low-temperature characteristics and cycling performance.

To achieve the above purpose, this application provides a negative electrode plate, a preparation method thereof, a secondary battery, a battery module, a battery pack, and an electric apparatus.

A first aspect of this application provides a negative electrode plate including a negative electrode current collector and a negative electrode film layer on at least one surface of the negative electrode current collector, where the negative electrode film layer includes a fluoropolymer, and the fluoropolymer includes a polymer of a monomer in formula 1 and at least one of a copolymer of a monomer in formula 1 and a monomer in formula 2, 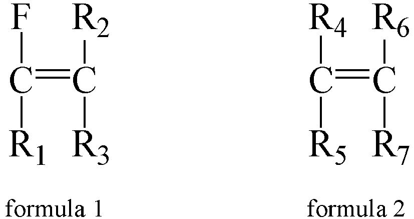 where
Ri to R₇ are each independently selected from -H, -F, -Cl, -COOH, -COOR, -CHO, - COR, -CONH₂, -CONHR, -CN, -CCl₃, -CF₃, -NO₂, -OH, -OR, -R, and -ROR, optionally selected from -H, -F, -Cl, -COOH, and -COOR;
where R represents a C₁-C₁₈ straight-chain or branched alkyl group, optionally a C₁-C₁₅ straight-chain or branched alkyl group, and further optionally a C₁-C₁₀ straight-chain or branched alkyl group; and
the fluoropolymer is present in the negative electrode film layer in form of spherical particles.

Therefore, in this application, the fluoropolymer in form of spherical particles is included in the negative electrode film layer of the negative electrode plate such that the fluoropolymer in form of spherical particles can undergo an electrochemical reduction reaction on the surface of the negative electrode active material during formation of secondary battery, resulting in the generation of the fluorine-containing solid electrolyte interface film. The generated fluorine-containing solid electrolyte interface film has a low interfacial impedance, which makes the secondary battery exhibit better low-temperature characteristics; in addition, the fluorine-containing solid electrolyte interface film can prevent direct contact between the electrolyte and the negative electrode active material, thereby inhibiting the reduction reaction of the electrolyte and improving the cycling performance of the secondary battery.

In any embodiment, the polymer of the monomer in formula 1 has a relative molecular mass of 10W-300W, optionally 20W-200W; and the copolymer of the monomer in formula 1 and the monomer in formula 2 has a relative molecular mass of 10W-300W, optionally 20W-200W. When the relative molecular mass of the polymer or copolymer is within the given range, the low-temperature characteristics and cycling performance of the secondary battery can be further improved.

In any embodiment, the spherical particles have a diameter of 50 nm-500 nm, optionally 100 nm-200 nm. When the diameter of the spherical particles is within the given range, the low-temperature characteristics and cycling performance of the secondary battery can be further improved.

In any embodiment, a weight percentage of the fluoropolymer in the negative electrode film layer is 0.1%-10%, optionally 0.1%-5%, based on a total weight of the negative electrode film layer. When the weight percentage of the fluoropolymer in the negative electrode film layer is within the given range, the low-temperature characteristics and cycling performance of the secondary battery can be further improved.

In any embodiment, a percentage of fluorine in the fluoropolymer is 41%-85%, optionally 59%-76%, based on a weight of the fluoropolymer.

In any embodiment, a percentage of the fluorine in the negative electrode film layer is 0.04%-8.5%, optionally 0.5%-6%, based on the total weight of the negative electrode film layer.

A second aspect of this application further provides a preparation method of negative electrode plate, including:
dispersing a negative electrode active material, a conductive agent, a binder, and other additives into deionized water, and adding an emulsion containing a fluoropolymer to obtain a negative electrode slurry, where the fluoropolymer is present in the emulsion containing the fluoropolymer in form of spherical particles, and the fluoropolymer is present in the negative electrode slurry in form of spherical particles; applying the negative electrode slurry onto at least one surface of a negative electrode current collector, followed by drying and cold pressing to obtain a negative electrode plate,
where the negative electrode plate includes the negative electrode current collector and a negative electrode film layer on the at least one surface of the negative electrode current collector, where the negative electrode film layer includes a fluoropolymer, and the fluoropolymer includes at least one of a polymer of a monomer in formula 1 and a copolymer of a monomer in formula 1 and a monomer in formula 2, 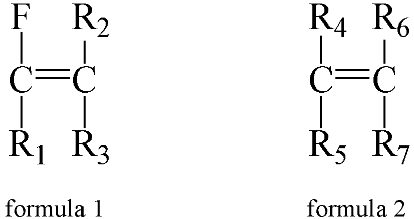
where
   Ri to R₇ are each independently selected from -H, -F, -Cl, -COOH, -COOR, -CHO, - COR, -CONH₂, -CONHR, -CN, -CCl₃, -CF₃, -NO₂, -OH, -OR, -R, and -ROR, optionally selected from -H, -F, -Cl, -COOH, and -COOR;
   where R represents a C₁-C₁₈ straight-chain or branched alkyl group, optionally a C₁-C₁₅ straight-chain or branched alkyl group, and further optionally a C₁-C₁₀ straight-chain or branched alkyl group; and
   the fluoropolymer is present in the negative electrode film layer in form of spherical particles.

Thus, during the preparation of the negative electrode slurry, the emulsion containing the fluoropolymer in form of spherical particles is added to the negative electrode slurry. The fluoropolymer in form of spherical particles remains in the negative electrode film layer such that an electrochemical reduction reaction occurs on the surface of the negative electrode active material during formation of secondary battery, generating the fluorine-containing solid electrolyte interface film.

A third aspect of this application provides a secondary battery including the negative electrode plate according to the first aspect of this application or the negative electrode plate prepared using the method according to the second aspect of this application.

A fourth aspect of this application provides a battery module including the secondary battery according to the third aspect of this application.

A fifth aspect of this application provides a battery pack including the battery module according to the fourth aspect of this application.

A sixth aspect of this application provides an electric apparatus including at least one selected from the secondary battery according to the third aspect of this application, the battery module according to the fourth aspect of this application, or the battery pack according to the fifth aspect of this application.

The battery module, the battery pack, and the electric apparatus of this application include the secondary battery of this application and thus have at least the same advantages as the secondary battery.

### BRIEF DESCRIPTION OF DRAWINGS

FIG. 1 is a scanning electron microscope (SEM) image (left) and an energy-dispersive spectroscopy (EDS) image (right) of a fluoropolymer in a negative electrode plate according to an embodiment of this application;
FIG. 2 is a schematic diagram of a secondary battery according to an embodiment of this application;
FIG. 3 is an exploded view of the secondary battery according to the embodiment of this application in FIG. 2;
FIG. 4 is a schematic diagram of a battery module according to an embodiment of this application;
FIG. 5 is a schematic diagram of a battery pack according to an embodiment of this application;
FIG. 6 is an exploded view of the battery pack according to an embodiment of this application in FIG. 5; and
FIG. 7 is a schematic diagram of an electric apparatus using a secondary battery as a power source according to an embodiment of this application.

Reference signs in the accompanying drawings are described as follows:
1. battery pack; 2. upper box; 3. lower box; 4. battery module; 5. secondary battery; 51. housing; 52. electrode assembly; and 53. top cover assembly.

### DESCRIPTION OF EMBODIMENTS

The following specifically discloses in detail embodiments of a negative electrode plate and a preparation method thereof, a secondary battery, a battery module, a battery pack, and an electric apparatus of this application with appropriate reference to the accompanying drawings. However, there may be cases where unnecessary detailed descriptions are omitted. For example, detailed descriptions of a well-known matter and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, that the method may further include step (c) indicates that step (c) may be added to the method in any sequence. For example, the method may include steps (a), (b), and (c), or steps (a), (c), and (b), or steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

For secondary batteries in electric vehicles and consumer electronics, achieving both excellent low-temperature characteristics and cycling performance has always been a demand from end customers. To improve either the low-temperature characteristics or cycling performance, the commonly used means include optimizing the particle size of the primary material, coating the surface of the primary material, optimizing electrolyte additives, and similar approaches. However, most of the existing means have reached the bottleneck and cannot simultaneously improve both the low-temperature characteristics and cycling performance of secondary batteries. Therefore, there is an urgent need to develop a technology that can improve both the low-temperature characteristics and cycling performance of secondary batteries.

In this application, a fluoropolymer in form of spherical particles is included in a negative electrode film layer of a negative electrode plate such that the fluoropolymer in form of spherical particles can undergo an electrochemical reduction reaction on surface of a negative electrode active material during formation of a secondary battery, generating a fluorine-containing solid electrolyte interface film, thus improving the low-temperature characteristics and cycling performance of secondary batteries.

### [Negative electrode plate]

In an embodiment of this application, this application proposes a negative electrode plate including a negative electrode current collector and a negative electrode film layer on at least one surface of the negative electrode current collector, where the negative electrode film layer includes a fluoropolymer, and the fluoropolymer includes at least one of a polymer of a monomer in formula 1 and a copolymer of a monomer in formula 1 and a monomer in formula 2, 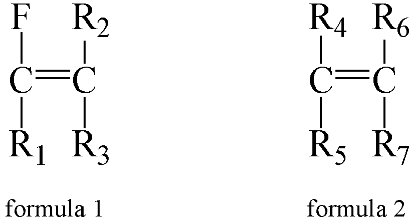 where
Ri to R₇ are each independently selected from -H, -F, -Cl, -COOH, -COOR, -CHO, - COR, -CONH₂, -CONHR, -CN, -CCl₃, -CF₃, -NO₂, -OH, -OR, -R, and -ROR, optionally selected from -H, -F, -Cl, -COOH, and -COOR;
where R represents a C₁-C₁₈ straight-chain or branched alkyl group, optionally a C₁-C₁₅ straight-chain or branched alkyl group, and further optionally a C₁-C₁₀ straight-chain or branched alkyl group; and
the fluoropolymer is present in the negative electrode film layer in form of spherical particles.

Although the mechanism is not clear, the applicant has unexpectedly discovered that in this application by including the fluoropolymer in form of spherical particles in the negative electrode film layer of the negative electrode plate, the fluoropolymer in form of spherical particles can undergo an electrochemical reduction on the surface of the negative electrode active material during the formation of the secondary battery, generating the fluorine-containing solid electrolyte interface film. The generated fluorine-containing solid electrolyte interface film has a low interfacial impedance, which makes the secondary battery exhibit better low-temperature characteristics; in addition, the fluorine-containing solid electrolyte interface film can prevent direct contact between the electrolyte and the negative electrode active material, thereby inhibiting the reduction reaction of the electrolyte and improving the cycling performance of the secondary battery.

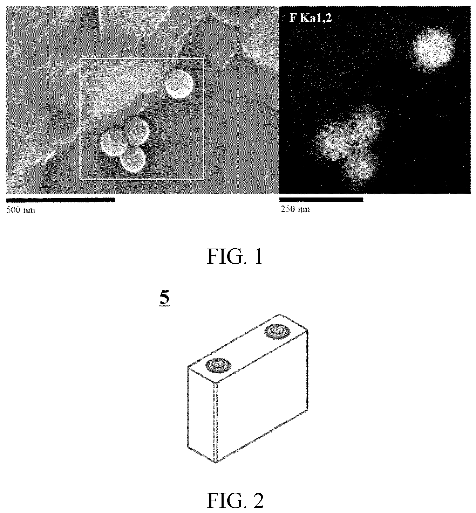

As shown in FIG. 1 (left), the fluoropolymer is present in the negative electrode film layer in form of spherical particles; as shown in FIG. 1 (right), the spherical particles contain an element F, that is, the spherical particles are the fluoropolymer.

In some embodiments, R is a C₁-C₈ straight-chain or branched alkyl group, optionally a C₁-C₆ straight-chain or branched alkyl group, such as methyl, ethyl, propyl, or butyl.

In some embodiments, R is a substituted straight-chain or branched alkyl group, optionally, substituted with -OH or a halogen, and further optionally, substituted with -OH, -Cl, or -F.

In some embodiments, the monomer in formula 1 is one or more of vinylidene fluoride (VDF), trifluoroethylene, chlorotrifluoroethylene, tetrafluoroethylene, hexafluoropropylene, fluoroethylene, perfluoromethyl vinyl ether, and perfluoropropyl vinyl ether, and the monomer in formula 2 is one or more of hydrophilic acrylic acid, methyl acrylate, ethyl acrylate, propyl acrylate, butyl acrylate, methyl methacrylate, ethyl methacrylate, propyl methacrylate, butyl methacrylate, hydroxyethyl acrylate, and 2-hydroxypropyl acrylate.

In some embodiments, the polymer of the monomer in formula 1 has a relative molecular mass of 10W-300W, optionally 20W-200W, and further optionally 50W-100W; and the copolymer of the monomer in formula 1 and the monomer in formula 2 has a relative molecular mass of 10W-300W, optionally 20W-200W, and further optionally 50W-100W.

In this application, the relative molecular mass of the polymer or copolymer can be obtained by testing using methods well known in the art. As an example, gel permeation chromatography (GPC) can be used.

If the relative molecular mass of the polymer or copolymer is too small (less than 10W), it becomes difficult to accurately control the relative molecular mass during the preparation process, resulting in uneven molecular mass distribution and poor consistency of the negative electrode plate; if the relative molecular mass of the polymer or copolymer is too large (greater than 300W), it becomes difficult to form a solid electrolyte film at the negative electrode, thus failing to improve the low-temperature characteristics and cycling performance of the secondary battery.

In some embodiments, the spherical particles have a diameter of 50 nm-500 nm, optionally 100 nm-200 nm, and further optionally 120 nm-200 nm.

In this application, the diameter of the spherical particles can be obtained by testing using methods well known in the art. As an example, a laser particle size analyzer can be used to test Dv₅₀ as the diameter of the spherical particles of this application.

When the diameter of the spherical particles is less than 50 nm, it becomes challenging to meet the synthesis requirements; when the diameter of the spherical particles is greater than 500 nm, the stability of the spherical particles in the emulsion is compromised, which affects the stability of the negative electrode slurry and leads to poor consistency of the electrode, thereby affecting the electrical performance of the electrode.

In some embodiments, a weight percentage of the fluoropolymer in the negative electrode film layer is 0.1%-10%, optionally 0.1%-5%, 1%-10%, or 1%-5%, based on a total weight of the negative electrode film layer. When the weight percentage of the fluoropolymer in the negative electrode film layer is less than 0.1%, the improvement in the low-temperature characteristics and cycling performance of the secondary battery is limited, and when the weight percentage of the fluoropolymer in the negative electrode film layer is higher than 10%, the fluoropolymer heavily encapsulates the negative electrode material and instead deteriorates the resistance.

In some embodiments, the negative electrode film layer further includes a negative electrode active material, a conductive agent, a binder, and other additives.

In some embodiments, the binder is an emulsion with water as a dispersion medium.

In some embodiments, the binder may be selected from one or more of styrene-butadiene rubber (SBR) emulsion, benzene propylene emulsion, polyacrylamide (PAM) emulsion, polyacrylic acid (PAA), polyacrylonitrile (PAN), sodium polyacrylate (PAAS), polyvinyl alcohol (PVA), sodium alginate (SA), polymethacrylic acid (PMAA), and carboxymethyl chitosan (CMCS).

In some embodiments, the binder is one or more of styrene-butadiene rubber (SBR) emulsion, benzene propylene emulsion, and polyacrylamide (PAM) emulsion.

In some embodiments, a weight percentage of the binder in the negative electrode film layer is 1%-10% based on the total weight of the negative electrode film layer.

In some embodiments, a percentage of fluorine in the fluoropolymer is 41%-85%, optionally 59%-76% or 58%-65%, based on a weight of the fluoropolymer.

In some embodiments, a percentage of the fluorine in the negative electrode film layer is 0.04%-8.5%, optionally 0.06%-6%, and further optionally 0.5%-6%, based on the total weight of the negative electrode film layer.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. As an example, the negative electrode active material may include at least one of the following materials: artificial graphite, natural graphite, soft carbon, hard carbon, silica-based material, tin-based material, lithium titanate, and the like. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials but may use other conventional materials that can be used as negative electrode active materials for batteries instead. One of these negative electrode active materials may be used alone, or two or more of them may be used in combination.

In some embodiments, the negative electrode active material is one or more of artificial graphite, natural graphite, soft carbon, hard carbon, and silicon-carbon material.

In some embodiments, a weight percentage of the negative electrode active material in the negative electrode film layer is 85-98%, based on the total weight of the negative electrode film layer.

In some embodiments, the conductive agent may be selected from at least one of superconducting carbon, acetylene black, carbon black, Ketjen black, carbon dots, carbon nanotubes, graphene, and carbon nanofibers.

In some embodiments, the conductive agent is one or more of SP, graphene, carbon nanotubes, and flake graphite.

In some embodiments, a weight percentage of the conductive agent in the negative electrode film layer is 0-10% based on the total weight of the negative electrode film layer.

In some embodiments, other additives include, for example, dispersants such as sodium carboxymethyl cellulose (CMC-Na) and lithium carboxymethyl cellulose (CMC-Li).

In some embodiments, a weight percentage of other additives in the negative electrode film layer is 0.5-5% based on the total weight of the negative electrode film layer.

In one embodiment of this application, a preparation method of negative electrode plate is provided, including:
dispersing a negative electrode active material, a conductive agent, a binder, and other additives into deionized water, and adding an emulsion containing a fluoropolymer to obtain a negative electrode slurry, where the fluoropolymer is present in the emulsion containing the fluoropolymer in form of spherical particles, and the fluoropolymer is present in the negative electrode slurry in form of spherical particles; applying the negative electrode slurry onto at least one surface of a negative electrode current collector, followed by drying and cold pressing to obtain a negative electrode plate,
where the negative electrode plate includes the negative electrode current collector and a negative electrode film layer on the at least one surface of the negative electrode current collector, where the negative electrode film layer includes a fluoropolymer, and the fluoropolymer includes at least one of a polymer of a monomer in formula 1 and a copolymer of a monomer in formula 1 and a monomer in formula 2, 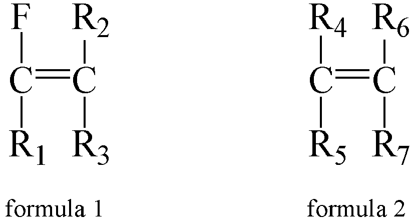
where
Ri to R₇ are each independently selected from -H, -F, -Cl, -COOH, -COOR, -CHO, - COR, -CONH₂, -CONHR, -CN, -CCl₃, -CF₃, -NO₂, -OH, -OR, -R, and -ROR, optionally selected from -H, -F, -Cl, -COOH, and -COOR;
where R represents a C₁-C₁₈ straight-chain or branched alkyl group, optionally a C₁-C₁₅ straight-chain or branched alkyl group, and further optionally a C₁-C₁₀ straight-chain or branched alkyl group; and
the fluoropolymer is present in the negative electrode film layer in form of spherical particles.

Thus, when preparing the negative electrode slurry, the emulsion of fluoropolymer in form of spherical particles is added to the negative electrode slurry. The fluoropolymer in form of spherical particles remains in the negative electrode film layer such that an electrochemical reduction reaction occurs on the surface of the negative electrode active material during formation of secondary battery, generating the fluorine-containing solid electrolyte interface film.

The preparation method of emulsion containing a fluoropolymer includes, but is not limited to:
A polymerization kettle was vacuumed; it was then flushed with nitrogen to remove oxygen. Deionized water was added, along with an initiator, an emulsifier, and other additives. A first monomer and any optional second monomer were introduced, raising the pressure to the polymerization pressure. It was then heated to the polymerization temperature to initiate a polymerization reaction. During the polymerization process, the first monomer and any optional second monomer were continuously added to maintain the pressure inside the kettle at a constant range. After the reaction was complete, the polymerization emulsion was collected. The first monomer is selected from one or more of vinylidene fluoride (VDF), trifluoroethylene, chlorotrifluoroethylene, tetrafluoroethylene, hexafluoropropylene, fluoroethylene, perfluoromethyl vinyl ether, and perfluoropropyl vinyl ether, optionally vinylidene fluoride (VDF) monomer. The second cell is selected from one or more of hydrophilic acrylic acid, methyl acrylate, ethyl acrylate, propyl acrylate, butyl acrylate, methyl methacrylate, ethyl methacrylate, propyl methacrylate, butyl methacrylate, hydroxyethyl acrylate, and 2-hydroxypropyl acrylate, optionally acrylic acid. The initiator is dimethyl dicarbonate peroxide, diethyl dicarbonate peroxide, diisopropyl dicarbonate peroxide (IPP), diisobutyl dicarbonate peroxide, ammonium persulfate, potassium persulfate, tert-butyl hydroperoxide, beta-hydroxyethyl tert-butyl peroxide, beta-hydroxypropyl tert-butyl peroxide, beta-hydroxyisopropyl tert-butyl peroxide, beta-hydroxybutyl tert-butyl peroxide, beta-hydroxyisobutyl tert-butyl peroxide, and benzoyl peroxide. The emulsifier is one or more of sodium perfluorooctanoate, ammonium perfluorooctanoate, ammonium perfluorononanoate, perfluorinated or partially fluorinated alkyl carboxylic acid, perfluorinated or partially fluorinated monoalkyl phosphate, perfluorinated or partially fluorinated alkyl ether or polyether carboxylic acid. The co-emulsifier is one or more of hexadecanol, polyvinyl alcohol amine, n-amyl alcohol, laurylamine, coconut oil amine, or octadecylamine. The chain transfer agent is at least one of cyclohexane, isopropanol, methanol, diethyl carbonate, ethyl acetate, isopropanol, and acetone, optionally acetone.

In addition, the following describes a secondary battery, a battery module, a battery pack, and an electric apparatus in this application with appropriate reference to the accompanying drawings.

In an embodiment of the application, a secondary battery is provided, which includes the negative electrode plate of the first aspect of the application or the negative electrode plate prepared according to the method of the second aspect of the application.

Normally, the secondary battery includes a positive electrode plate, a negative electrode plate, an electrolyte, and a separator. In a charge and discharge process of the battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

### [Positive electrode plate]

The positive electrode plate includes a positive current collector and a positive electrode film layer arranged on at least one surface of the positive electrode current collector, and the positive electrode film layer includes a positive electrode active material.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a positive electrode active material for batteries well-known in the art. For example, the positive electrode active material may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. One of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM₃₃₃ for short), LiNi_{0.5}Co_{0.2}Mn₀.₃O₂ (NCM₅₂₃ for short), LiNi_{0.5}Co_{0.25}Mn_{0.25}O₂ (NCM₂₁₁ for short), LiNi_{0.6}Co_{0.2}Mn_{0.2}O₂ (NCM₆₂₂ for short), and LiNi_{0.8}Co_{0.1}Mn_{0.1}O₂ (NCM₈₁₁ for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon.

In some embodiments, the positive electrode active material can be a positive electrode active material known in the art of sodium ion batteries. As an example, the positive electrode active material may include at least one of the following materials: Prussian blue (PBA) type ((NaₓMA [MB(CN)₆]-zH₂O (MA and MB are transition metal ions)), which is a compound consisting of sodium, transition metal, and cyanogen, such as Na₄Fe₂(CN)₆, Na₄Fe(CN)₆, Na_{1.72}MnFe₂(CN)₆, and NaMnMn(CN)₆, NaNiFe(CN)₆, and the like; oxide type (NaₓMO₂(0<x≤1, and M is a transition metal element)), which consists of transition metal oxides, involving mainly variable-valence transition metals such as vanadium (V), chromium (Cr), manganese (Mn), iron (Fe), cobalt (Co), nickel (Ni), and copper (Cu), among which the use of manganese and iron, which are more abundant, is most common, such as NaCrO₂, NaMnO₂, NaMnO₂, Na_{0.61}Ti_{0.48}Mn_{0.52}O₂, Na[Fe_{0.5}Co_{0.5}]O₂, NaMnO₂, and Na[Ni_{0.25}Fe_{0.5}Mn_{0.25}]O₂; and polyanionic compounds (NaₓM_{y}[(XOₘ)ₙ₋]_{z}(M is a metal ion with variable valence; X is elements such as P, S, and V)), which consists of sodium, transition metals, and anions, of which the transition metals are mainly iron, vanadium, and cobalt, while the anions mainly include phosphate, pyrophosphate, fluorophosphate, and sulfate, such as NaMnFe₂(PO₄)₆, Na₂MnP₂O₇, Na₃V₂(PO₄)₃, Na₂Fe₂(SO₄)₃, NaFePO₄, Na₃V₂(PO₄)₂F₃, and Na₄Co₃(PO₄)₂(P₂O₇).

In some embodiments, the positive film layer may further optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropene-tetrafluoroethylene terpolymer, tetrafluoroethylene-hexafluoropropylene copolymer, fluorinated acrylate resin, polyacrylate (PAA), and polyacrylonitrile (PAN).

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Electrolyte]

The electrolyte conducts ions between the positive electrode plate and the negative electrode plate. The electrolyte is not specifically limited to any particular type in this application and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolyte salt can be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluorooxalate borate, lithium dioxalate borate, lithium difluorooxalate phosphate, and lithium tetrafluorooxalate phosphate.

In some embodiments, the solvent may be selected from at least one of ethylene carbonate (ethylene carbonate), propylene carbonate (propylene carbonate), ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the liquid electrolyte further optionally includes an additive. For example, the additives may include negative electrode film layer-forming additives, positive electrode film-forming additives, and may also include additives that improve some properties of the battery, such as additives that improve the overcharge performance of the battery, and additives that improve the high or low-temperature performance of the battery.

### [Separator]

In some embodiments, the secondary battery further includes a separator. The separator is not limited to any particular type in this application and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer packaging can be used to enclose the above electrode assembly and electrolyte.

In some embodiments, the outer package of the secondary battery may be a hard shell, for example, a hard plastic shell, an aluminum shell, or a steel shell. The outer packaging of the secondary battery may also be a flexible package, such as a pouch-type flexible package. Material of the soft pack may be plastic, which, for example, may be polypropylene, polybutylene terephthalate, and polybutylene succinate.

This application does not impose any special limitations on a shape of the secondary battery, and the secondary battery may be cylindrical, rectangular, or of any other shapes. For example, FIG. 2 shows a secondary battery 5 of a rectangular structure as an example.

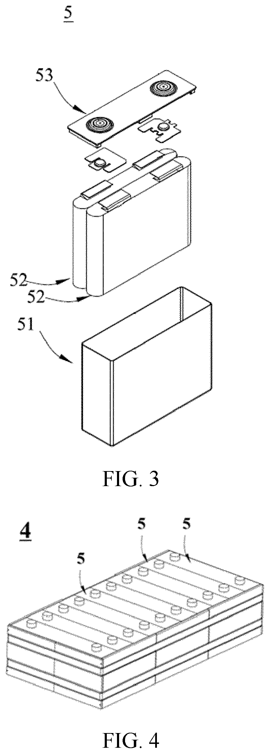

In some embodiments, referring to FIG. 3, the outer package may include a housing 51 and a cover plate 53. The housing 51 may include a bottom plate and a side plate attached to the bottom plate, the bottom plate and the side plate enclosing an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 4 shows a battery module 4 as an example. Referring to FIG. 4, in the battery module 4, a plurality of secondary batteries 5 may be arranged sequentially along a length direction of the battery module 4. Certainly, the batteries may alternatively be arranged in any other manners. The plurality of secondary batteries 5 may be further secured by fasteners.

Optionally, the battery module 4 may further include a housing with accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

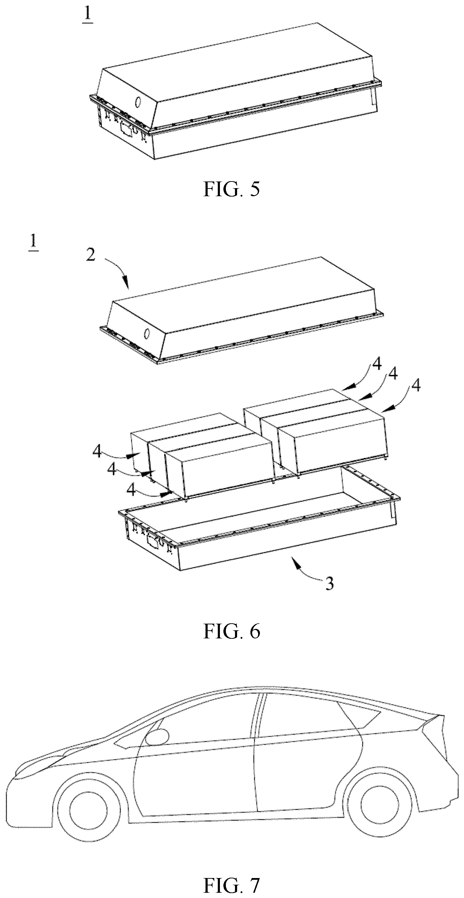

FIGs. 5 and 6 show a battery pack 1 as an example. Referring to FIGs. 5 and 6, the battery pack 1 may include a battery box and a plurality of battery modules 4 provided in the battery box. The battery box includes an upper box 2 and a lower box 3, and the upper box 2 can cover the lower box 3 to form a closed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 7 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. The apparatus usually requires to be light and thin, and a secondary battery may be used as a power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Example 1

### [Preparation of positive electrode plate]

A positive electrode active material LiNi_{0.5}Co_{0.2}Mn_{0.3}O₂(NCM523), a conductive agent acetylene black, and a binder PVDF were mixed well at a ratio of 96:2:2 by weight in the solvent N-methylpyrrolidone (NMP) to obtain a positive electrode slurry; the positive electrode slurry was evenly applied on the two surfaces of a positive electrode collector aluminum foil with a thickness of 13 µm, and after drying and cold pressing processes, a positive electrode plate was obtained. The surface density of the positive electrode plate was 18 g/cm² and the compacted density was 3.4 g/cm³.

### [Preparation of negative electrode plate]

A negative electrode active material artificial graphite, a conductive agent acetylene black, a binder styrene-butadiene rubber (SBR) emulsion, and a dispersant sodium carboxymethyl cellulose (CMC-Na) were dissolved in solvent deionized water, and an emulsion of polyvinylidene fluoride was added and mixed well to obtain a negative electrode slurry, where in the negative electrode slurry, the negative electrode active material artificial graphite, the conductive agent acetylene black, the binder styrene-butadiene rubber (SBR) emulsion, and the dispersant sodium carboxymethyl cellulose (CMC-Na) and polyvinylidene fluoride are in a weight ratio of 95:0.5:2:1.5:1; the negative electrode slurry was uniformly applied on two surfaces of a negative electrode current collector copper foil with a thickness of 6 µm, and after drying and cold pressing, a negative electrode plate is obtained; where the polyvinylidene fluoride was present in the negative electrode plate in form of spherical particles. The surface density of the negative electrode plate was 12 g/cm²and the compacted density was 1.6 g/cm³.

In the emulsion polyvinylidene fluoride, the polyvinylidene fluoride was present in form of spherical particles. A preparation method of emulsion of polyvinylidene fluoride is as follows.

A polymerization kettle was vacuumed; it was then flushed with nitrogen to remove oxygen. Deionized water was added, along with an initiator, diisopropyl peroxydicarbonate (IPP), which accounted for 0.35% of the weight of the monomer. An emulsifier, sodium perfluorooctanoate, was also included, accounting for 0.15% of the weight of the monomer, and a chain transfer agent, acetone, was added, constituting 1.0% of the weight of the monomer. A monomer, vinylidene fluoride (VDF), was introduced, raising the pressure to the polymerization pressure of 3.5-4.0 MPa. It was then heated to the polymerization temperature of 70°C to initiate a polymerization reaction. During the polymerization reaction, vinylidene fluoride (VDF) was continuously added to maintain the pressure inside the kettle at a constant range of 3.5-4.0 MPa. After 3 hours, the reaction was complete, and the polymerization emulsion was collected. Polyvinylidene fluoride with a relative molecular mass of 50 W-100 W and a diameter of 120 nm was obtained.

### [Separator]

Commercially available polyethylene microporous films with a thickness of 7 µm were used.

### [Preparation of electrolyte]

In an argon atmosphere glove box, ethylene carbonate (EC) and ethyl methyl carbonate (EMC) were mixed well at a weight ratio of 3:7 to obtain an organic solvent, and electrolyte salt LiPF₆, which was sufficiently dried, was dissolved in the above organic solvent and mixed well to obtain the electrolyte, where a concentration of the electrolyte salt is 1.0 mol/L.

### [Preparation of secondary battery]

The positive electrode plate, the separator, and the negative electrode plate were sequentially stacked so that the separator was located between the positive electrode plate and the negative electrode plate to provide separation. Then the resulting stack was wound to obtain an electrode assembly. The electrode assembly was placed into a battery housing and dried. Then electrolyte was injected, and processes such as formation and standing were performed to obtain a secondary battery.

### Examples 2-6

Preparation of secondary battery basically followed that of Example 1, except that in the preparation of negative electrode plate, weight ratios of the negative electrode active material artificial graphite, the conductive agent acetylene black, the binder styrene-butadiene rubber (SBR) emulsion, the dispersant sodium carboxymethyl cellulose (CMC-Na) and polyvinylidene difluoride are 95.99:0.5:2:1.5:0.01, 95.9:0.5:2:1.5:0.1, 91:0.5:2:1.5:5, 86:0.5:2:1.5:10, and 81:0.5:2:1.5:15 in the negative electrode slurry.

### Examples 7-11

Preparation of secondary battery basically followed that of Example 1, except that in the preparation of negative electrode plate, diameters of polyvinylidene fluoride in form of spherical particles were 20 nm, 50 nm, 200 nm, 500 nm, and 600 nm, respectively. The preparation method of polyvinylidene fluoride in form of spherical particles with different diameters followed that of Example 1, except that for a diameter of 20 nm, the emulsifier used was instead a mixture of ammonium perfluorooctanoate and n-pentyl alcohol, with respective amounts of 10.75% and 3.6% by weight of the monomer; for a diameter of 50 nm, the emulsifier used was instead a mixture of ammonium perfluorooctanoate and n-pentyl alcohol, with respective amounts of 6.5% and 2.2% by weight of the monomer; for a diameter of 200 nm, an amount of sodium perfluorooctanoate was 0.3% of the weight of the monomer; for a diameter of 500 nm, an amount of sodium perfluorooctanoate was 0.15% of the weight of the monomer, and the reaction temperature was 50°C; and for a diameter of 600 nm, an amount of sodium perfluorooctanoate was 0.1% of the weight of the monomer, and the reaction temperature was 40°C.

### Example 12

Preparation of secondary battery basically followed that of Example 1, except that in the preparation of the negative electrode plate, the emulsion of polyvinylidene fluoride is replaced with an emulsion of vinylidene fluoride-chlorotrifluoroethylene (92:8 by weight) copolymer. In the emulsion of vinylidene fluoride-chlorotrifluoroethylene copolymer, the vinylidene fluoride-chlorotrifluoroethylene copolymer was present in form of spherical particles. The emulsion of vinylidene fluoride-chlorotrifluoroethylene copolymer is prepared as follows:

A polymerization kettle was vacuumed; it was then flushed with nitrogen to remove oxygen. Deionized water was added, along with an initiator, diisopropyl peroxydicarbonate (IPP), which accounted for 0.3% of a total weight of the monomer. An emulsifier, sodium perfluorooctanoate, was also included, accounting for 0.15% of the total weight of the monomer, and a chain transfer agent, acetone, was added, constituting 1.0% of the total weight of the monomer. Monomers, vinylidene fluoride (VDF) and chlorotrifluoroethylene (CTFE) (with a weight ratio of 92:8), were introduced, raising the pressure to the polymerization pressure of 3.5-4.0 MPa. It was then heated to the polymerization temperature of 80°C to initiate a polymerization reaction. During the polymerization reaction, monomers were continuously added to maintain the pressure inside the kettle at a constant range of 3.5-4.0 MPa. After 2.5 hours, the reaction was complete, and the polymerization emulsion was collected. The vinylidene fluoride-chlorotrifluoroethylene copolymer that was obtained had a relative molecular mass of 50W-100W and a diameter of 120 nm.

### Example 13

Preparation of secondary battery basically followed that of Example 1, except that in the preparation of the negative electrode plate, the emulsion of polyvinylidene fluoride was replaced with an emulsion of vinylidene fluoride-hexafluoropropylene (with a weight ratio of 94:6) copolymer. In the emulsion of vinylidene fluoride-hexafluoropropylene copolymer, the vinylidene fluoride-hexafluoropropylene copolymer was present in form of spherical particles. The emulsion of vinylidene fluoride-hexafluoropropylene copolymer is prepared as follows:

A polymerization kettle was vacuumed; it was then flushed with nitrogen to remove oxygen. Deionized water was added, along with an initiator, diisopropyl peroxydicarbonate (IPP), which accounted for 0.3% of a total weight of the monomer. An emulsifier, sodium perfluorooctanoate, was also included, accounting for 0.15% of the total weight of the monomer, and a chain transfer agent, acetone, was added, constituting 1.0% of the total weight of the monomer. Monomers, vinylidene fluoride (VDF) and hexafluoropropylene (HFP) (with a weight ratio of 94:6), were introduced, raising the pressure to the polymerization pressure of 3.5-4.0 MPa. It was then heated to the polymerization temperature of 76°C to initiate a polymerization reaction. During the polymerization reaction, the monomers vinylidene fluoride (VDF) and hexafluoropropylene (HFP) were continuously added to maintain the pressure inside the kettle at a constant range of 3.5-4.0 MPa. After 3.2 hours, the reaction was complete, and the polymerization emulsion was collected. The vinylidene fluoride-hexafluoropropylene copolymer that was obtained had a relative molecular mass of 50W-100W and a diameter of 120 nm.

### Example 14

Preparation of secondary battery basically followed that of Example 1, except that in the preparation of the negative electrode plate, the emulsion of polyvinylidene fluoride was replaced with an emulsion of vinylidene fluoride-tetrafluoroethylene-hexafluoropropylene (with a weight ratio of 94:3:3) copolymer. In the emulsion of vinylidene fluoride-tetrafluoroethylene-hexafluoropropylene copolymer, the vinylidene fluoride-tetrafluoroethylene-hexafluoropropylene copolymer was present in form of spherical particles. The emulsion of vinylidene fluoride-tetrafluoroethylene-hexafluoropropylene copolymer was prepared as follows:

A polymerization kettle was vacuumed; it was then flushed with nitrogen to remove oxygen. Deionized water was added, along with an initiator, diisopropyl peroxydicarbonate (IPP), which accounted for 0.35% of a total weight of the monomer. An emulsifier, sodium perfluorooctanoate, was also included, accounting for 0.15% of the total weight of the monomer, and a chain transfer agent, acetone, was added, constituting 1.0% of the total weight of the monomer. Monomers, vinylidene fluoride (VDF), tetrafluoroethylene (TFE), and hexafluoropropylene (HFP) (with a weight ratio of 94:3:3), were introduced, raising the pressure to the polymerization pressure of 3.5-4.0 MPa. It was then heated to the polymerization temperature of 75°C to initiate a polymerization reaction. During the polymerization reaction, the monomers, vinylidene fluoride (VDF), tetrafluoroethylene (TFE), and hexafluoropropylene (HFP), were continuously added to maintain the pressure inside the kettle at a constant range of 3.5-4.0 MPa. After 3.2 hours, the reaction was complete, and the polymerization emulsion was collected. The vinylidene fluoride-tetrafluoroethylene-hexafluoropropylene copolymer that was obtained had a relative molecular mass of 50 W-100 W and a diameter of 120 nm.

### Example 15

Preparation of secondary battery basically followed that of Example 1, except that in the preparation of the negative electrode plate, the emulsion of polyvinylidene fluoride was replaced with an emulsion of vinylidene fluoride-acrylic acid copolymer (with a weight ratio of 97:3) copolymer. In the emulsion of vinylidene fluoride-acrylic acid copolymer, the vinylidene fluoride-acrylic acid copolymer was present in form of spherical particles. The emulsion of vinylidene fluoride-acrylic acid copolymer was prepared as follows:

A polymerization kettle was vacuumed; it was then flushed with nitrogen to remove oxygen. Deionized water was added, along with an initiator, diisopropyl peroxydicarbonate (IPP), which accounted for 0.45% of the total weight of the monomer. An emulsifier, sodium perfluorooctanoate, was also included, accounting for 0.18% of the total weight of the monomer. Additionally, a chain transfer agent, acetone, was added, constituting 1.0% of the total weight of the monomer, and acrylic acid was incorporated, including 3.0% of the total weight of the monomer. A monomer, vinylidene fluoride (VDF), was introduced, raising the pressure to the polymerization pressure of 5.5-6.0 MPa. It was then heated to the polymerization temperature of 65°C to initiate a polymerization reaction. During the polymerization reaction, the monomers vinylidene fluoride (VDF) were continually added to maintain the pressure inside the kettle at a constant range of 5.5-6.0 MPa. After 3.5 hours, the reaction was complete, and the polymerization emulsion was collected. The vinylidene fluoride-acrylic acid copolymer that was obtained had a relative molecular mass of 50 W-100 W and a diameter of 120 nm.

### Comparative example 1

Preparation of secondary battery basically followed that of Example 1, except that in the preparation of the negative electrode plate, the emulsion of polyvinylidene fluoride was not added, and the weight ratio of the negative electrode active material artificial graphite, the conductive agent acetylene black, the binder styrene-butadiene rubber (SBR) emulsion, and the dispersant sodium carboxymethylcellulose (CMC-Na) was 96:0.5:2:1.5 in the negative electrode slurry.

### Comparative example 2

Preparation of secondary battery basically followed that of Example 1, except that in the preparation of the negative electrode plate, the negative electrode active material artificial graphite, the conductive agent acetylene black, and the PVDF binder powder are dissolved in solvent N-methylpyrrolidone (NMP) according to a weight ratio of 94:2:4, and mixed uniformly to obtain the negative electrode slurry, and the negative electrode slurry is applied uniformly to two surfaces of a negative electrode current collector copper foil, followed by drying and cold pressing to obtain the negative electrode plate. Polyvinylidene fluoride was present in the negative electrode plate in form of filamentary film, based on the total weight of the negative electrode film layer. The surface density of the negative electrode plate was 12 g/cm²and the compacted density was 1.6 g/cm³.

### Parameters and performance testing

### 1. Molecular weight of fluoropolymer

The relative molecular masses were measured by gel permeation chromatography (GPC) using waters e2695.

### 2. Diameter of fluoropolymer

The Dv₅₀of the fluoropolymer was measured as the diameter of the spherical particles using a laser particle size analyzer Malvern 3000.

### 3. Low-temperature characteristics testing of secondary battery

Firstly, the actual capacity of the battery was tested: the battery was charged to 100% SOC (charge state), and after low current depolarization, it was left to rest for 5 minutes; subsequently, a discharge was conducted at 0.33C until the battery reached 0% SOC. The resulting capacity was determined as the capacity of the battery. Next, a direct current resistance (DCR) of the battery at -25°C was tested under 50% SOC and 20% SOC conditions: The battery was adjusted to 50% SOC at room temperature, then left to rest for 60 minutes under -25°C conditions, and is discharged at 0.33C for 30 seconds. Finally, current resistance data of the battery was collated for 10 seconds.

### 4. Cycling performance testing of secondary battery

Firstly, the actual capacity of the battery was tested: the battery was charged to 100% SOC, and after low current depolarization, it was left to rest for 5 minutes; subsequently, a discharge was conducted at 0.33C until the battery reached 0% SOC. The resulting capacity was determined as the capacity of the battery. Next, the battery underwent a 25°C/45°C cycling test: The battery was charged at 1C to 100% SOC, allowed to rest for 5 minutes, and then discharged at 1C to 0% SOC; the foregoing steps were repeated until the capacity of the battery declined to 80%. Then the cycling data was collated.

According to the above process, the above examples and comparative examples were tested separately. The specific values can be found in table 1.

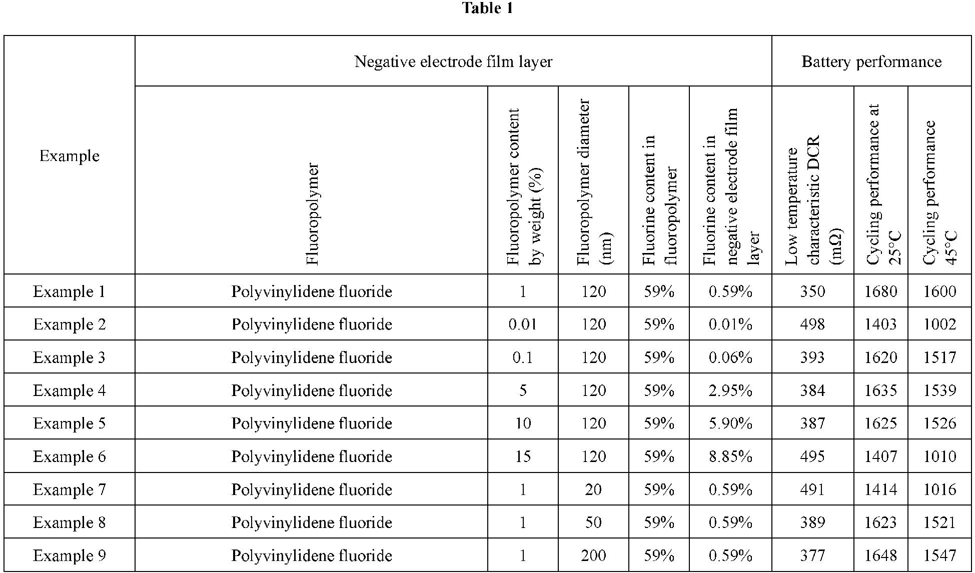

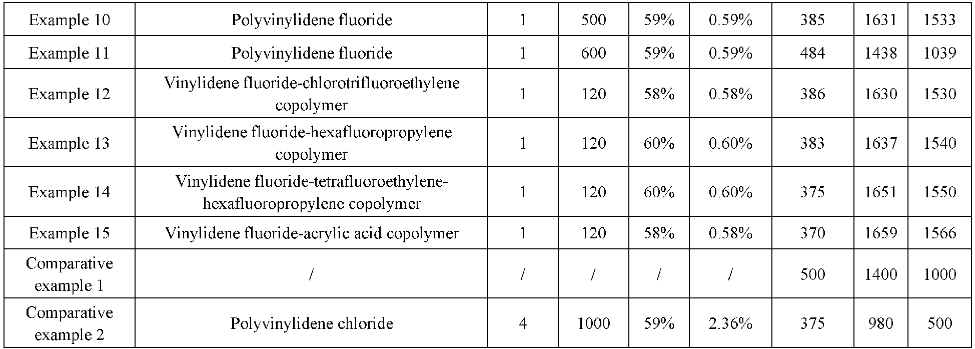

From table 1, it can be observed that the cycling performance of all the above embodiments of the secondary battery is superior to that of the comparative examples. As compared to the Comparative example 1, the negative electrode film layer of the negative electrode plate containing fluoropolymer in form of spherical particles not only improves the cycling performance of the secondary battery but also enhances its low-temperature characteristics. The cycling performance of the secondary battery can be significantly improved when the fluoropolymer exists in the negative electrode plate as spherical particles, as compared to the Comparative example 2 where polyvinylidene fluoride exists in form of fibrous film in the negative electrode plate.

By comparing Example 1 to Example 6, it can be concluded that when the weight percentage of the fluoropolymer in the negative electrode film layer is 0.1%-10%, the low-temperature characteristics and cycling performance of the secondary battery can be further improved.

By comparing Example 1 and Examples 8 to 11, it can be concluded that when the diameter of the spherical particles is 50 nm-500 nm, the low-temperature characteristics and cycling performance of the secondary battery can be further improved.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A negative electrode plate comprising a negative electrode current collector and a negative electrode film layer on at least one surface of the negative electrode current collector, wherein the negative electrode film layer comprises a fluoropolymer, and the fluoropolymer comprises at least one of a polymer of a monomer in formula 1 and a copolymer of a monomer in formula 1 and a monomer in formula 2, 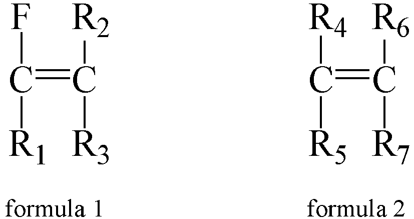 wherein
Ri to R₇ are each independently selected from -H, -F, -Cl, -COOH, -COOR, -CHO, -COR, - CONH₂, -CONHR, -CN, -CCl₃, -CF₃, -NO₂, -OH, -OR, -R, and -ROR, optionally selected from - H, -F, -Cl, -COOH, and -COOR;
wherein R represents a C₁-C₁₈ straight-chain or branched alkyl group, optionally a C₁-C₁₅ straight-chain or branched alkyl group, and further optionally a C₁-C₁₀ straight-chain or branched alkyl group; and
the fluoropolymer is present in the negative electrode film layer in form of spherical particles.

2. The negative electrode plate according to claim 1, wherein the polymer of the monomer in formula 1 has a relative molecular mass of 10W-300W, optionally 20W-200W; and the copolymer of the monomer in formula 1 and the monomer in formula 2 has a relative molecular mass of 10W-300W, optionally 20W-200W.

3. The negative electrode plate according to claim 1 or 2, wherein the spherical particles have a diameter of 50 nm-500 nm, optionally 100 nm-200 nm.

4. The negative electrode plate according to any one of claims 1 to 3, wherein a weight percentage of the fluoropolymer in the negative electrode film layer is 0.1%-10%, optionally 0. 1%-5%, based on a total weight of the negative electrode film layer.

5. The negative electrode plate according to any one of claims 1 to 4, wherein a percentage of fluorine in the fluoropolymer is 41%-85%, optionally 59%-76%, based on a weight of the fluoropolymer.

6. The negative electrode plate according to any one of claims 1 to 5, wherein a percentage of the fluorine in the negative electrode film layer is 0.04%-8.5%, optionally 0.5%-6%, based on the total weight of the negative electrode film layer.

7. A preparation method of negative electrode plate, comprising:
dispersing a negative electrode active material, a conductive agent, a binder, and other additives into deionized water, and adding an emulsion containing a fluoropolymer to obtain a negative electrode slurry, wherein the fluoropolymer is present in the emulsion containing the fluoropolymer in form of spherical particles, and the fluoropolymer is present in the negative electrode slurry in form of spherical particles; applying the negative electrode slurry onto at least one surface of a negative electrode current collector, followed by drying and cold pressing to obtain a negative electrode plate,
wherein the negative electrode plate comprises the negative electrode current collector and a negative electrode film layer on the at least one surface of the negative electrode current collector, wherein the negative electrode film layer comprises a fluoropolymer, and the fluoropolymer comprises at least one of a polymer of a monomer in formula 1 and a copolymer of a monomer in formula 1 and a monomer in formula 2, 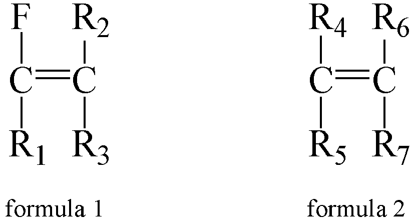
wherein
Ri to R₇ are each independently selected from -H, -F, -Cl, -COOH, -COOR, -CHO, -COR, - CONH₂, -CONHR, -CN, -CCl₃, -CF₃, -NO₂, -OH, -OR, -R, and -ROR, optionally selected from - H, -F, -Cl, -COOH, and -COOR;
wherein R represents a C₁-C₁₈ straight-chain or branched alkyl group, optionally a C₁-C₁₅ straight-chain or branched alkyl group, and further optionally a C₁-C₁₀ straight-chain or branched alkyl group; and
the fluoropolymer is present in the negative electrode film layer in form of spherical particles.

8. A secondary battery, comprising the negative electrode plate according to any one of claims 1 to 6 or the negative electrode plate prepared by the method according to claim 7.

9. A battery module, comprising the secondary battery according to claim 8.

10. A battery pack, comprising the battery module according to claim 9.

11. An electric apparatus, comprising at least one selected from the secondary battery according to claim 8, the battery module according to claim 9, or the battery pack according to claim 10.
